# EUROPEAN PATENT SPECIFICATION

(11) **EP 0 870 659 B1**
(45) Date of publication and mention of the grant of the patent: **04.10.2001**
(21) Application number: 98106098.1
(22) Date of filing: 03.04.1998
(51) Int. Cl.: B60T 8/26, B60T 8/32, B60T 13/68, B62L 3/08

(54) **Braking system with antiblocking device for a two-wheel vehicle**
Bremsanlage mit einer Antiblockiervorrichtung für ein Zweiradfahrzeug
Système de freinage avec dispositif d'antiblocage pour un véhicule à deux roues

(30) Priority: 10.04.1997 IT TO970303
(43) Date of publication of application: 14.10.1998
(73) Proprietor: C.R.F. Societa' Consortile per Azioni, 10043 Orbassano (Torino) (IT)
(72) Inventor: Rovera, Giuseppe, 10100 Torino (IT); Ippolito, Luigi, 10044 Pianezza (Torino) (IT); Mesiti, Domenico, 10040 Leini' (Torino) (IT)
(74) Representative: Di Francesco, Gianni

(56) References cited:
- EP-A- 0 487 888
- DE-A- 3 342 555
- DE-A- 4 015 746
- DE-A- 4 022 481
- GB-A- 2 249 597
- US-A- 4 717 211
- PATENT ABSTRACTS OF JAPAN vol. 016, no. 021 (M-1201), 20 January 1992 -& JP 03 235747 A (HONDA MOTOR CO LTD), 21 October 1991

## Description

This invention relates to a two wheeled vehicle hydraulic braking system equipped with an antiblocking device. The said device can be mounted on a two-wheel vehicle, such as a scooter or motorcyle, which normally uses a unique brake control for vehicle stopping and slowing down.

Generally, the brakes on each of the wheels of scooters and motorcycles are controlled by way of separate commands. The front wheel can either be controlled by way of a manual lever command, whilst the rear wheel is controlled by a pedal lever, activated by the driver (foot).

Accordingly, integral systems are known, in which the rear brake pedal also activates the front brake, which can, however, also be controlled by (and only by) a manual lever.

The said type of system is also equipped with an antiblocking device, of the type installed on automoblles, suitable for use on two-wheeled vehicles.

The said type of device is, as is known, normally controlled by an electronic switchboard that works on the basis of signals sent by rotation velocity sensors, located on the wheels. To absorb excess pressure fluid sent to the piston-type single brake piston calipers when the wheel tends to block, a series of electrovalves, controlled by a switchboard, is used, connecting the hydraulic circuit of the brake calipers to an absorbing cylinder. The said values are, as mentioned, controlled through the switchboard, that activates the recycle pump, that recirculates the oil, previously released in the absorbing cylinder, in the brake pump chambers, making it available for successive release in the brake caliper circuit. Such a hydraulic braking system is known from GB 2 249 597.

This type of system is efficient, but very expensive, and can therefore rarely be used for scooters, which, in order to be competitive, must be sold at relatively low prices. It is clear that the additional cost of such a complex antiblocking device is not a valid solution. At the same time, because scooters or motorcycles are mostly used for transportation in the city, where tires will not necessarily adhere to the ground correctly, due to the presence of tramway tracks or pedestrian crossings, and particularly when streets arc wet, it would be very useful to be able to use a braking device equipped with an antiblocking system. However, the said device should be available at a relatively low price, whilst ensuring reliability, error-free operation and taking up as little space as possible, given the limited space available on the vehicle.

Another type of braking system, showing all the features of the preamble of claim 1, that can be used for two wheeled vehicles is known from DE 3 342 555A. In the event of a malfunction of the antiblocking system, the braking corrector still reduces brake pressure to the rear wheel. Therefore, the front wheel will block before the rear wheel.

It is an object of the present invention to provide a braking system for two-wheeled vehicles in which in the event of antiblocking system failure the wheel blockage begins at the rear wheel.

The object of the present invention is achieved by a two-wheeled vehicle hydraulic braking system as claimed in claim 1.

The system includes a second on-off valve that controls the hydraulic circuit fixing the master cylinder to the braking means on the front and back wheels.

In preferred embodiments a variable absorbing chamber is located on the hydraulic circuit, parallel to the second on-off valve. Chamber variation is obtained by way of a sliding piston. Piston movement is regulated by a piezoelectric or magnetorestrictive type linear motor. According the present invention the linear motor is controlled by the electronic switchboard.

According to another preferred embodiment of the present invention a no-return valve is fixed upstream of the second on-off valve in the connection of the variable volume chamber and the hydraulic circuit, that connects the master cylinder controlled by the brake control and the braking means on the wheels.

Other characteristics and advantages will appear clearly from the description provided hereby, in an example of a non-restrictive embodiment. Reference being made to the accompanying drawings, in which :
- Figure 1 is a schematic view of a braking system including, according to the present invention, the antiblocking function for the wheels :
- Figure 2 is an enlarged view of a section of Figure 1.

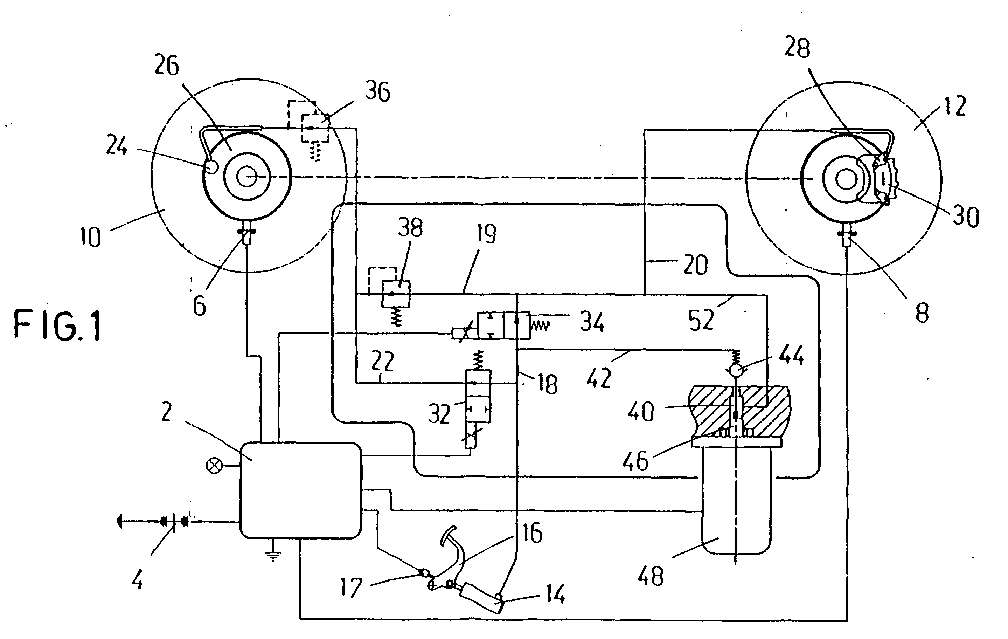

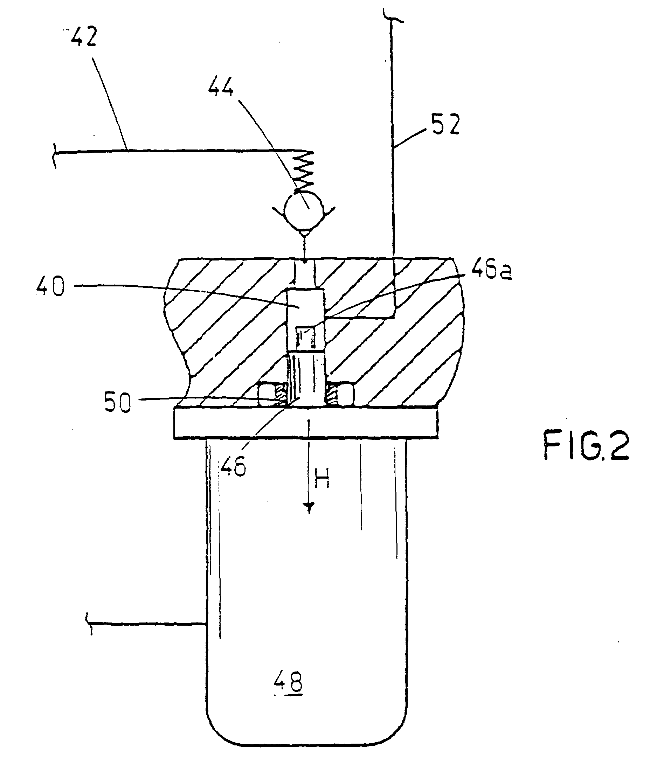

The system illustrated in Figures 1 and 2 is composed of an electronic control and command switchboard 2, connected to the electronic power supply 4, receiving signals from velocity sensors 6 and 8, controlling the velocity of wheels 10 and 12 of a two-wheeled motorcycle, and by a master braking cylinder 14 of the known type, activated by way of pedal 16, with a signal switch 17. Pedal 16 can, of course, be substituted by a manual lever control, and can still be applicable to the object of the present invention.

The master cylinder is connected by way of a conduit 18, dividing into conduits 19 and 20, respectively in small cylinder 23 of rear drum brake 26 and brake caliper 28 of front disk brake 30. A bypass conduit 22 that leads to rear drum brake 26 is equipped with a first on-off valve 32, normally open, controlled by switchboard 2 and designed to cutoff the passage of fluid from master cylinder 14, according to a signal, sent by switchboard 2. A second on-off electrovalve 34, located on conduit 18 and also normally open, is controlled by switchboard 2, and is designed to cut off fluid transmission from the said master cylinder 14 to conduits 19 and 20, according to a signal transmitted by switchboard 2. Conduit 19 also includes, in series, a first brake corrector 36. The operation of this corrector is well known and will therefore not be described here.

A second brake corrector 38, also of the know type, is inserted in conduit 19, downstream of the second on-off valve. Parallel to the second on-off valve 34, and connected upstream and downstream of the said valve, is located a variable volume, cylinder-type absorption chamber 40 (Figure 2), as illustrated. Conduit 42, that connects this chamber upstream of the on-off valve, or directly to master cylinder 14, is equipped with a fluid non return valve 44, that prevents the passage of the fluid from master cylinder 14 to the chamber 40, but not vice versa.

The volume of said chamber 40 can be made to vary by way of the axial sliding of a piston 46 inside the chamber. The movement of the piston is regulated by way of a linear motor 48 of piezoelectric or magnetorestrictive type, normally available for sale. Piston 46, placed entirely on one side (end run) keeps valve 44 open, and therefore ensures the connection between conduit 42 and conduit 52, by way of an axial nib 46a.

This makes it possible to obtain additional pressure by way of control 16, or reduce pressure through non return valve 44. To limit costs, a simple electric motor can also be used as the linear motor, if it includes a device (of know type) that guarantees the non movement of piston 46, unless a specific signal is transmitted by the electronic switchboard 2.

A circumferential sealing 50 prevents pressure fluid flow out of chamber 40. Conduit 52, connecting chamber 40 to conduit 20 downstream of the second on-off valve 34 does not include control devices.

Motor 48 is connected to switchboard 2, that is used to control motor activation.

System operation will be described below.

When brake pedal 16 is pressed to slow down vehicle movement, the action is transmitted to switchboard 2, by way of switch 17. This commutates electrovalve 32 from the normally open position to the closed position. In this way, the pressure fluid from the master cylinder reaches the rear brake small cylinder 24, and the front brake caliper 28, through conduits 18, 19 and 20, passing through the second on-off valve 34, that remains normally open, and also through the second and the first brake corrector 38, 36.

The said first brake corrector could also be eliminated, without necessarily affecting system efficiency. In this way, braking will be applied to both wheels simultaneously, the controlled rear braking force being applied subsequently by way of brake correctors 38 and 36.

If the pressure applied to the front wheel is too high with respect to tire adhesion to the ground, the front wheel, not subjected to the control of the brake corrector, tends to be blocked. Corrector 38 setting will in fact be calculated in order that the front wheel be blocked first. As with other antiblockage systems of the known type, this blockage will be transmitted to the switchboard by the velocity sensor 8.

Electronic switchboard 2 intervenes at this point. The switchboard is activated by the block signal, and switches electrovalve 34 to the closed position, to avoid master cylinder 14 action. If the wheel continues to be blocked, linear motor 48 is activated, in order that the piston 46 be moved in the direction of arrow H, to increase the volume of chamber 40. The increase in chamber 40 volume through absorption of fluid from caliper 28 makes it possible to reduce the braking force applied to front brake 30, necessary to make sure the tire adheres to the ground again. When tire adhesion to the ground increases, according to appropriate control logic, the braking force is again applied. The volume in chamber 40 is reduced by moving piston 46 which is pushed by motor 48 in the direction opposite arrow H. This causes fluid transmission to brake caliper via conduit 52, and pressure therefore increases in brake caliper 28.

In the event of an antiblocking system failure, switchboard 2 will commute on-off electro valves 32 and 34, in the position off (valve open), reestablishing the passive vehicle configuration, meaning the vehicle is no longer equipped with an antiblocking system. In this case, wheel blockage begins at the rear wheel.

The following advantages can be obtained by way of the present invention.

System cost is reduced considerably, because the number of components is reduced. The motor group 48, the piston 46, the variable volume chamber 40 substitute the pressure fluid discharge valve, the absorption cylinder and the recycle pump of a traditional system, components that (particularly the pump) increase the cost of the system.

Another advantage of this system is that is optimizes system front wheel braking functions, which is very important, whilst maintaining the functional aspect linked to the passive vehicle, in the event of system malfunction.

## Claims

1. Two-wheeled vehicle hydraulic braking system, comprising
- a master cylinder (14),
- a first braking means (28) for braking the front wheel (12),
- a second braking means (24) for braking the rear wheel (10), wherein said master cylinder in connected by means of a first hydraulic conduit (18) to a second hydraulic conduit (19,20) connecting the braking means (28,24) of the front and rear wheels (12,10),
- a braking corrector (38) located between the connection of the first hydraulic conduit (18) to the second hydraulic conduit (19,20) and the rear wheel braking means (24),
- an antiblocking system (40,46,48) controlling both wheels (12,10) connected to the second hydraulic conduit (19,20) between said braking corrector (38) and said front wheel braking means (28),
- second on-off valve (34) located in said first hydraulic conduit being a part of the antiblocking system (40,46,48),
- an electronic switchboard (2) for controlling said second on-off valve (34) and said antiblocking system (40, 46, 48),
- a switch (17) for detecting actuation of the master cylinder (14) and outputting a signal to the switchboard (2),
said braking system **characterised by** further comprising
- a by-pass conduit (22) connected to the first hydraulic conduit (18) between the master cylinder (14) and the second on-off valve (34) and the second hydraulic conduit (19) between the corrector (38) and the rear wheel braking means (24), and
- a first on-off valve (32) located in said by-pass conduit (22), wherein said switchboard (2) controls said first on-off valve (32) such that said by-pass conduit (22) is closed when the master cylinder (14) is actuated and open in case of failure of the antiblocking system (40,46,48).

2. Braking system according to claim 1 **characterized by** the fact that a variable volume absorption chamber (40) is located on the hydraulic circuit (18). parallel to said second on-off valve (34).

3. Braking system according to claim 2 **characterized by** the fact that the variation in volume of the said chamber (40) is obtained by sliding a piston (46) located inside the chamber; said piston movement being regulated by a linear type motor (48).

4. Braking system according to claim 3 **characterized by** the fact that the linear motor (48) is a piezoelectric-type motor.

5. Braking system according to claim 3 **characterized by** the fact that the linear motor (48) is a magnetorestrictive-type motor.

6. Braking system according to claim 3 **characterized by** the fact that the linear motor (48) is an electric motor equipped with a device of known type that guarantees motion will occur constantly in one direction.

7. Braking system according to claim 3 **characterized by** the fact that the linear motor (48) is controlled by the electronic switchboard (2).

8. Braking system according to claim 1, 2, **characterized by** the fact that a non return valve (44) is located in the connection between the variable volume chamber (40) and the hydraulic circuit (18), upstream of said on-off valve (34).

9. Braking system according to claim 8 and any of the claims 3 to 7 **characterized by** the fact that said piston (46) is equipped with means (46a) aimed at keeping the non return valve open (44), when it is out entirely.

## Patentansprüche

1. Hydraulisches Bremssystem eines zweirädrigen Fahrzeuges, umfassend
- einen Hauptbremszylinder (14),
- ein erstes Bremsmittel (28) zur Bremsung des Vorderrades (12),
- ein zweites Bremsmittel (24) zur Bremsung des Hinterrades (10), worin der Hauptbremszylinder mit Hilfe einer ersten hydraulischen Rohrleitung (18) mit einer zweiten hydraulischen Rohrleitung (19, 20) verbunden ist, die die Bremsmittel (28, 24) des Vorder- und des Hinterrades (12, 20) miteinander verbindet,
- einen Bremskorrektor (38), der sich zwischen der Verbindung der ersten hydraulischen Rohrleitung (18) mit der zweiten hydraulischen Rohrleitung (19, 20) und dem Bremsmittel des Hinterrades (24) befindet,
- ein Antiblockiersystem (40, 46, 48), das beide Räder steuert, das mit der zweiten hydraulischen Rohrleitung (19, 20) zwischen dem Bremskorrektor (38) und den Bremsmitteln des Vorderrades (28) verbunden ist,
- ein zweites Auf-Zu-Ventil (34), das sich in der ersten hydraulischen Rohrleitung befindet und ein Teil des Antiblockiersystems (40, 46, 48) ist,
- eine elektronische Schalttafel (2), um das zweite Auf-zu-Ventil (34) und das Antiblockiersystem (40, 46, 48) zu steuern,
- einen Schalter (17) zur Feststellung der Betätigung des Hauptbremszylinders (14) und der Ausgabe eines Signals an die Schalttafel (2),
wobei das Bremssystem **dadurch gekennzeichnet ist, daß** es weiter folgendes umfaßt:
- eine Umgehungsrohrleitung (22), die mit der ersten hydraulischen Rohrleitung (18) zwischen dem Hauptbremszylinder (14) und dem zweiten Auf-Zu-Ventil (34) und der zweiten hydraulischen Rohrleitung (19) zwischen dem Korrektor (38) und dem Bremsmittel des Hinterrades (24) verbunden ist, und
- ein erstes Auf-Zu-Ventil (32), das sich in der Umgehungsrohrleitung (22) befindet, worin die Schalttafel (2) das erste Auf-Zu-Ventil (32) steuert, so **daß** die Umgehungsrohrleitung (22) geschlossen ist, wenn der Hauptbremszylinder (14) im Fall eines Fehlers des Antiblockiersystems (40, 46, 48) betätigt wird und offen ist.

2. Bremssystem nach Anspruch 1, **dadurch gekennzeichnet, daß** sich eine Absorptionskammer mit veränderbarem Rauminhalt (40) auf dem hydraulischen Kreislauf (18) befindet, parallel zum zweiten Auf-Zu-Ventil (34).

3. Bremssystem nach Anspruch 2, **dadurch gekennzeichnet, daß** die Veränderung des Rauminhalts der Kammer (40) durch die Verschiebung eines Kolbens (46), der sich innerhalb der Kammer befindet, erreicht wird, wobei die Bewegung des Kolbens durch einen Motor linearer Art (48) reguliert wird.

4. Bremssystem nach Anspruch 3, **dadurch gekennzeichnet, daß** der Linearmotor (48) ein Motor piezoelektrischer Art ist.

5. Bremssystem nach Anspruch 3, **dadurch gekennzeichnet, daß** der Linearmotor (48) ein Motor magnetorestriktiver Art ist.

6. Bremssystem nach Anspruch 3, **dadurch gekennzeichnet, daß** der Linearmotor (48) ein elektrischer Motor ist, der mit einer Vorrichtung bekannter Art ausgestattet ist, die garantiert, **daß** die Bewegung gleichbleibend in einer Richtung stattfindet.

7. Bremssystem nach Anspruch 3, **dadurch gekennzeichnet, daß** der Linearmotor (48) von der elektronischen Schalttafel (2) gesteuert wird.

8. Bremssystem nach Anspruch 1, **dadurch gekennzeichnet, daß** sich ein Sperrventil (44) in der Verbindung zwischen der Kammer mit veränderbarem Rauminhalt (40) und dem hydraulischen Kreislauf (18), vor dem Auf-Zu-Ventil, (34) befindet.

9. Bremssystem nach Anspruch 8 und irgendeinem der Ansprüche 3 bis 7, **dadurch gekennzeichnet, daß** der Kolben (46) mit einem Mittel (46a) ausgestattet ist, das darauf abzielt, das Sperrventil (44) offen zu halten, wenn es vollständig ausgeschaltet ist.

## Revendications

1. Système de freinage hydraulique pour véhicule à deux roues, comprenant
- un cylindre maître (14),
- un premier moyen de freinage (28) pour freiner la roue avant (12),
- un second moyen de freinage (24) pour freiner la roue arrière (10), dans lequel ledit cylindre maître est raccordé au moyen d'une première conduite hydraulique (18) à une seconde conduite hydraulique (19, 20) raccordant le moyen de freinage (28, 24) des roues avant et arrière (12, 10),
- un correcteur de freinage (38) placé entre la connexion de la première conduite hydraulique (18) à la seconde conduite hydraulique (19, 20 ) et le moyen de freinage de roue arrière (24),
- un système antipatinage (40, 46, 48) contrôlant les deux roues (12, 10) raccordé à la seconde conduite hydraulique (19, 20) entre ledit correcteur de freinage (38) et ledit moyen de freinage de roue avant (28),
- une seconde soupape d'ouverture-fermeture (34) placée dans ladite première conduite hydraulique étant une partie du système antipatinage (40, 46, 48),
- un panneau de distribution électronique (2) pour commander ladite seconde soupape d'ouverture-fermeture (34) et ledit système antipatinage (40, 46, 48),
- un interrupteur (17) pour détecter l'actionnement du cylindre maître (14) et sortir un signal vers le panneau de distribution (2),
ledit système de freinage étant **caractérisé en ce qu'**il comprend en outre :
- une conduite de dérivation (22) raccordée à la première conduite hydraulique (18) entre le cylindre maître (14) et la seconde soupape d'ouverture-fermeture (34) et la seconde conduite hydraulique (19) entre le correcteur (38) et le moyen de freinage de roue arrière (24), et
- une première soupape d'ouverture-fermeture (32) placée dans ladite conduite de dérivation (22), dans lequel ledit panneau de distribution (2) commande ladite première soupape d'ouverture-fermeture (32) d'une manière telle que ladite conduite de dérivation (22) est fermée lorsque le cylindre maître (14) est actionné et s'ouvre dans le cas d'une défaillance du système antipatinage (40, 46, 48).

2. Système de freinage selon la revendication 1, **caractérisé par** le fait qu'une chambre d'absorption à volume variable (40) est placée sur le circuit hydraulique (18), parallèle à ladite seconde soupape d'ouverture-fermeture (34).

3. Système de freinage selon la revendication 2, **caractérisé par** le fait que la variation de volume de ladite chambre (40) est obtenue en faisant coulisser un piston (46) placé à l'intérieur de la chambre ; ledit déplacement du piston étant régulé par un moteur du type linéaire (48).

4. Système de freinage selon la revendication 3, **caractérisé par** le fait que le moteur linéaire (48) est un moteur du type piézo-électrique.

5. Système de freinage selon la revendication 3, **caractérisé par** le fait que le moteur linéaire (48) est un moteur du type magnétostrictif.

6. Système de freinage selon la revendication 3, **caractérisé par** le fait que le moteur linéaire (48) est un moteur électrique muni d'un dispositif d'un type connu qui garantit que le mouvement se produira constamment dans une direction.

7. Système de freinage selon la revendication 3, **caractérisé par** le fait que le moteur linéaire (48) est commandé par le panneau de distribution électronique (2).

8. Système de freinage selon la revendication 1 ou 2, **caractérisé par** le fait qu'une soupape de non-retour (44) est placée dans la connexion entre la chambre à volume variable (40) et le circuit hydraulique (18), en amont de ladite soupape d'ouverture-fermeture (34).

9. Système de freinage selon la revendication 8 et selon l'une quelconque des revendications 3 à 7, **caractérisé par** le fait que ledit piston (46) est muni d'un moyen (46a) visant à maintenir la soupape de non-retour ouverte (44), lorsqu'elle est totalement ouverte.
